# EUROPEAN PATENT APPLICATION

(11) **EP 4 044 535 A1**
(43) Date of publication of application: **17.08.2022**
(21) Application number: 20892815.0
(22) Date of filing: 07.10.2020
(51) Int. Cl.: H04L 12/805

(54) **METHOD FOR ACQUIRING COMMON MAXIMUM SEGMENT SIZE (MSS), AND DEVICE**

(30) Priority: 26.11.2019 CN 201911177102
(71) Applicant: Huawei Technologies Co., Ltd., Shenzhen, Guangdong 518129 (CN)
(72) Inventor: MA, Liang, Shenzhen, Guangdong 518129 (CN); LI, Wenhui, Shenzhen, Guangdong 518129 (CN); YI, Wei, Shenzhen, Guangdong 518129 (CN)
(74) Representative: MERH-IP Matias Erny Reichl Hoffmann Patentanwälte PartG mbB
(86) International application number: PCT/CN2020/119851
(87) International publication number: WO 2021/103822

(57) **Abstract**

This application discloses a method and an apparatus for obtaining a shared maximum segment size MSS, and a storage medium, and belongs to the field of communications technologies. In this application, a first device may obtain a first parameter after a Transmission Control Protocol TCP connection is established, obtain a first MSS based on the first parameter, and further obtain a first shared MSS based on the first MSS and a second MSS. After the TCP connection is established, when a parameter of the TCP connection changes, the first device updates a shared MSS based on a changed parameter, and may use an updated shared MSS to transmit a packet. This helps save network resources and improve transmission reliability.

## Description

This application claims priority to Chinese Patent Application No. CN201911177102.X, filed with the China National Intellectual Property Administration on November 26, 2019, and entitled "METHOD AND APPARATUS FOR OBTAINING SHARED MAXIMUM SEGMENT SIZE MSS", which is incorporated herein by reference in its entirety.

### TECHNICAL FIELD

This application relates to the field of communications technologies, and in particular, to a method and an apparatus for obtaining a shared maximum segment size (maximum segment size, MSS).

### BACKGROUND

A Transmission Control Protocol (Transmission Control Protocol, TCP) specifies that a maximum length of a TCP packet cannot exceed an MSS, and the Transmission Control Protocol/Internet Protocol (Transmission Control Protocol/Internet Protocol, TCP/IP) specifies that a maximum length of an IP packet cannot exceed a maximum transmission unit (maximum transmission unit, MTU). Based on this, when establishing a TCP connection to a receiving device, the sending device may send a synchronous (synchronous, SYN) packet to the receiving device. The SYN packet may carry an MSS of the sending device. After receiving the SYN packet, the receiving device may send a synchronous_acknowledgment (synchronous_acknowledgement, SYN_ACK) packet to the sending device. The SYN_ACK packet carries an MSS of the receiving device. The receiving device may compare the MSS of the sending device with the MSS of the receiving device, and use a minimum value thereof as an MSS shared with the sending device. After receiving the SYN ACK packet, the sending device may compare the MSS of the receiving device with the MSS of the sending device, and use the minimum value thereof as an MSS shared with the receiving device. After determining the shared MSS through negotiation, the sending device and the receiving device perform packet transmission based on the shared MSS. This may cause a resource waste or packet loss.

### SUMMARY

This application provides a method and an apparatus for obtaining a packet of a shared MSS, and a computer-readable storage medium, to help save network resources and improve transmission reliability. The technical solutions are as follows.

According to a first aspect, a method for obtaining a shared MSS is provided, where the method includes: A first device obtains a first parameter after establishing a Transmission Control Protocol TCP connection, where the first parameter corresponds to the TCP connection; the first device obtains a first MSS based on the first parameter; and the first device obtains a first shared MSS based on the first MSS and a second MSS, where the second MSS is an MSS sent by a second device.

The first device may obtain the first parameter after establishing the TCP connection, obtain the first MSS based on the first parameter, and further obtain the first shared MSS based on the first MSS and the second MSS. That is, after a TCP connection is established, when a parameter of the TCP connection changes, a device may be triggered to perform MSS updating. In this way, an updated shared MSS is subsequently used for packet transmission. This avoids problems such as a resource waste, a packet loss, or a TCP throughput decrease caused by always using the MSS negotiated during the TCP connection establishment for packet transmission.

Optionally, the first parameter includes a maximum transmission unit MTU corresponding to an interface, and the interface is an interface corresponding to the TCP connection. On this basis, the first device may obtain the first MSS based on a second parameter and the MTU corresponding to the interface, where the second parameter is a length of a buffer obtained when the TCP connection is established, and the first MSS is a minimum value of the second parameter and a data length corresponding to the MTU.

Optionally, the first parameter includes an MTU corresponding to an interface and a length of a buffer, and the interface is an interface corresponding to the TCP connection. On this basis, the first device obtains the first MSS based on the MTU corresponding to the interface and the length of the buffer, where the first MSS is a minimum value of the length of the buffer and a data length corresponding to the MTU.

Optionally, the first parameter includes a first identifier, and the first identifier is used to identify an interface corresponding to the TCP connection. On this basis, the first device obtains the first MSS based on a third parameter and an MTU corresponding to the interface that is identified by the first identifier, where the third parameter is a length of a buffer obtained when the TCP connection is established, and the first MSS is a minimum value of the third parameter and a data length corresponding to the MTU.

Optionally, the first parameter includes a length of a buffer. On this basis, the first device obtains the first MSS based on a fourth parameter and the length of the buffer, where the fourth parameter is an MTU of an interface obtained when the TCP connection is established, the interface is an interface corresponding to the TCP connection, and the first MSS is a minimum value of the fourth parameter and the length of the buffer.

Optionally, the first parameter includes a first identifier and a length of a buffer, and the first identifier is used to identify an interface corresponding to the TCP connection. On this basis, the first device obtains the first MSS based on the length of the buffer and an MTU corresponding to the interface that is identified by the first identifier, where the first MSS is a minimum value of the length of the buffer and a data length corresponding to the MTU.

Optionally, after obtaining the first MSS, the first device may further obtain an update packet based on the first MSS, where the update packet includes the first MSS. The first device sends the update packet to the second device, so that the second device can synchronously update the shared MSS based on the first MSS in the update packet.

Optionally, when a forwarding device configured to forward a packet, that is, a third device, further exists between the first device and the second device, after the first device obtains the first shared MSS, the first device may obtain a data packet based on the first shared MSS, and then send the data packet to the third device. Correspondingly, after receiving the data packet, if a length of the data packet is greater than an MTU of the third device, the third device may send the MTU of the third device to the first device. In this case, the first device receives the MTU of the third device sent by the third device, obtains a third MSS based on the MTU of the third device, and obtains a second shared MSS based on the third MSS and the first shared MSS. The second shared MSS is a minimum value of the third MSS and the first shared MSS. The third device is a device on a path on which the first device and the second device are located, and the MTU of the third device is an MTU of an interface on the third device corresponding to the TCP connection. This can ensure that the final second shared MSS is adapted to the MTU of the third device.

Optionally, after obtaining the second shared MSS, the first device may send a data packet to the second device again based on the second shared MSS through the third device, where the data packet may be segmented according to the second shared MSS. In this case, the third device may successfully forward the data packet to the second device.

According to a second aspect, a method for obtaining a shared MSS is provided, where the method includes: A second device obtains a first shared MSS based on a first MSS and a second MSS, where the first MSS is an MSS obtained after a first device establishes a Transmission Control Protocol TCP connection, and the second MSS is an MSS obtained when the second device establishes the TCP connection.

That is, after determining the first MSS based on a changed parameter, the first device may send the first MSS to the second device, and the second device may update a shared MSS based on the first MSS and the second MSS, to resolve problems in a related technology such as a resource waste, a packet loss, or a TCP throughput decrease caused by always using the MSS negotiated during the TCP connection establishment for packet transmission.

Optionally, the second device may obtain the first MSS by receiving an update packet sent by the first device, where the update packet includes the first MSS.

Optionally, after obtaining the first shared MSS, the second device may further receive a plurality of fragment packets sent by a third device, where the third device is a device on a path on which the first device and the second device are located, the plurality of fragment packets are obtained by fragmenting, according to an MTU of the third device, a packet sent by the first device, and the MTU of the third device is an MTU of an interface on the third device corresponding to the TCP connection. The second device obtains a third MSS based on the plurality of fragment packets, and sends the third MSS to the first device, so that the first device obtains a second shared MSS based on the third MSS and the first shared MSS, where the second shared MSS is a minimum value of the third MSS and the first shared MSS.

According to a third aspect, an apparatus for obtaining a shared MSS is provided, where the apparatus for obtaining a shared MSS has a function of implementing the method behavior for obtaining a shared MSS in the first aspect or the second aspect. The apparatus for obtaining a shared MSS includes at least one module, and the at least one module is configured to implement the method for obtaining a shared MSS provided in the first aspect or the second aspect.

According to a fourth aspect, an apparatus for obtaining a shared MSS is provided, where a structure of the apparatus for obtaining a shared MSS includes a processor and a memory, and the memory is configured to store a program that supports the apparatus in performing the method for obtaining a shared MSS provided in the first aspect or the second aspect, and store data used to implement the method for obtaining a shared MSS provided in the first aspect or the second aspect. The processor is configured to execute the program stored in the memory. An operation apparatus of the storage device may further include a communications bus, and the communications bus is configured to establish a connection between the processor and the memory.

According to a fifth aspect, a computer-readable storage medium is provided. The computer-readable storage medium stores instructions, and when the instructions are run on a computer, the computer is enabled to perform the method for obtaining a shared MSS according to the first aspect or the second aspect.

According to a sixth aspect, a computer program product including instructions is provided. When the computer program product is run on a computer, the computer is enabled to perform the method for obtaining a shared MSS according to the first aspect or the second aspect.

Technical effects achieved in the second aspect, the third aspect, the fourth aspect, the fifth aspect, and the sixth aspect are similar to technical effects achieved by using corresponding technical means in the first aspect. Details are not described herein again.

Beneficial effects brought by the technical solutions provided in this application include at least the following: After establishing the TCP connection, the first device may update a shared MSS, such as the first shared MSS, based on a changed connection parameter, such as the first parameter. In this way, an updated shared MSS can be used for packet transmission, which helps avoid a resource waste, a packet loss, a TCP throughput decrease, or the like.

### BRIEF DESCRIPTION OF DRAWINGS

FIG. 1 is a diagram of a system architecture involved in a method for obtaining a shared MSS according to an embodiment of this application;
FIG. 2 is a schematic diagram of a structure of a computer device according to an embodiment of this application;
FIG. 3 is a flowchart of a method for obtaining a shared MSS according to an embodiment of this application;
FIG. 4 is a flowchart of another method for obtaining a shared MSS according to an embodiment of this application;
FIG. 5 is a flowchart of another method for obtaining a shared MSS according to an embodiment of this application;
FIG. 6 is a schematic diagram of a structure of an apparatus for obtaining a shared MSS according to an embodiment of this application; and
FIG. 7 is a schematic diagram of a structure of another apparatus for obtaining a shared MSS according to an embodiment of this application.

### DESCRIPTION OF EMBODIMENTS

To make the objectives, technical solutions, and advantages of this application clearer, the following further describes implementations of this application in detail with reference to accompanying drawings.

Before embodiments of this application are described in detail, a system architecture in the embodiments of this application is described first.

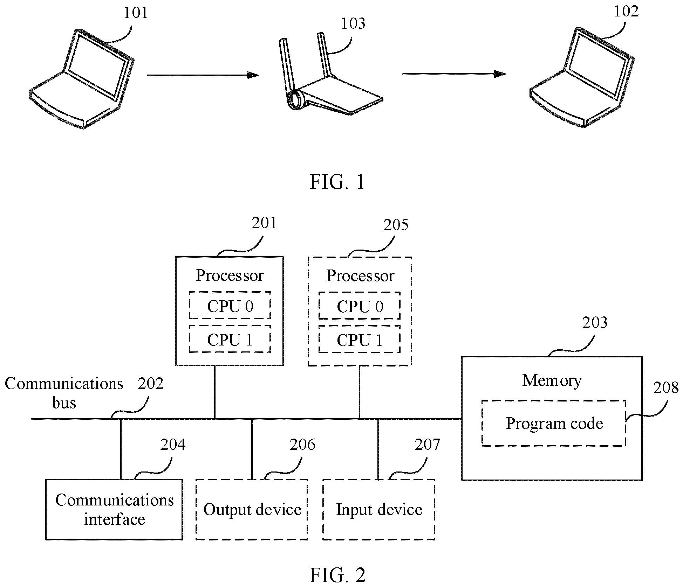

FIG. 1 is a diagram of a system architecture involved in a method for obtaining a shared MSS according to an embodiment of this application. As shown in FIG. 1, the system includes a first terminal device 101 and a second terminal device 102. The first terminal device 101 may communicate with the second terminal device 102 through a wired network or a wireless network. The first terminal device 101 may establish a TCP connection to the second terminal device 102. In a phase of establishing the TCP connection, the first terminal device 101 and the second terminal device 102 may determine an initial shared MSS through negotiation based on a parameter of the TCP connection. After the TCP connection is established, when detecting that the parameter of the TCP connection established by the first terminal device 101 changes, the first terminal device 101 may update the shared MSS based on a changed connection parameter by using the method for obtaining a shared MSS provided in this embodiment of this application. Correspondingly, the first terminal device 101 may alternatively indicate the second terminal device 102 to update the shared MSS. Similarly, if detecting that the parameter of the TCP connection established by the second terminal device 102 changes, the second terminal device 102 may obtain the shared MSS by using the method provided in this embodiment of this application, and indicate the first terminal device 101 to update the shared MSS. The first terminal device 101 and the second terminal device 102 may be intelligent terminals such as a tablet computer, a desktop computer, or a mobile phone.

For example, the system may further include a forwarding device 103. The first terminal device 101 and the second terminal device 102 may communicate with each other through the forwarding device 103. The forwarding device 103 may forward a packet from the first terminal device 101 to the second terminal device 102, and forward a packet from the second terminal device 102 to the first terminal device 101. The forwarding device 103 may be a network device that has a forwarding capability, such as a switch or a router.

FIG. 2 is a schematic diagram of a structure of a computer device according to an embodiment of this application. Both the first terminal device and the second terminal device in FIG. 1 may be implemented by using the computer device shown in FIG. 2. Refer to FIG. 2. The computer device includes at least one processor 201, a communications bus 202, a memory 203, and at least one communications interface 204.

The processor 201 may be a general-purpose central processing unit (Central Processing Unit, CPU), a microprocessor, an application-specific integrated circuit (application-specific integrated circuit, ASIC), or one or more integrated circuits configured to control program execution in the solutions of this application.

The communications bus 202 may include a channel for transmitting information between the foregoing components.

The memory 203 may be a read-only memory (read-only memory, ROM) or another type of static storage device capable of storing static information and instructions, or a random access memory (random access memory, RAM) or another type of dynamic storage device capable of storing information and instructions, or may be an electrically erasable programmable read-only memory (Electrically Erasable Programmable Read-Only Memory, EEPROM), a compact disc read-only memory (Compact Disc Read-Only Memory, CD-ROM) or another compact disc storage, an optical disc storage (including a compressed optical disc, a laser disc, an optical disc, a digital versatile disc, a Blu-ray disc, and the like), a magnetic disk storage medium or another magnetic storage device, or any other medium capable of carrying or storing expected program code in a form of instructions or data structures and capable of being accessed by a computer. However, the memory 203 is not limited thereto. The memory 203 may exist independently, and be connected to the processor 201 by using the communications bus 202. Alternatively, the memory 203 may be integrated with the processor 201.

The communications interface 204 may be any apparatus like a transceiver, and is configured to communicate with another device or communications network, such as Ethernet, a radio access network (RAN), or a wireless local area network (Wireless Local Area Networks, WLAN).

In an embodiment, the electronic device may include a plurality of processors, for example, the processor 201 and a processor 205 shown in FIG. 2. Each of the processors may be a single-core (single-CPU) processor, or may be a multi-core (multi-CPU) processor. The processor herein may be one or more devices, circuits, and/or processing cores configured to process data (for example, computer program instructions). The processor 201 may include one or more CPUs, for example, a CPU 0 and a CPU 1 shown in FIG. 2.

In an embodiment, the computer device may further include an output device 206 and an input device 207. The output device 206 communicates with the processor 201, and may display information in a plurality of manners. For example, the output device 206 may be a liquid crystal display (liquid crystal display, LCD), a light emitting diode (light emitting diode, LED) display device, a cathode ray tube (cathode ray tube, CRT) display device, or a projector (projector). The input device 207 communicates with the processor 201, and may receive an input from a user in a plurality of manners. For example, the input device 207 may be a mouse, a keyboard, a touchscreen device, or a sensing device.

The computer device may be a general-purpose computer device or a dedicated computer device. In specific implementation, the computer device may be a desktop computer, a portable computer, a network server, a communications device, or an embedded device. A type of the computer device is not limited in this embodiment of the present invention.

The memory 203 is configured to store a program code that is used to perform the solutions of this application, and the execution is controlled by the processor 201. The processor 201 is configured to execute program code 208 stored in the memory 203. The program code 208 may include one or more software modules. The first terminal device or the second terminal device shown in FIG. 1 may update an MSS by using the processor 201 and the one or more software modules in the program code 208 in the memory 203.

The following describes in detail the method for obtaining a shared MSS provided in the embodiments of this application.

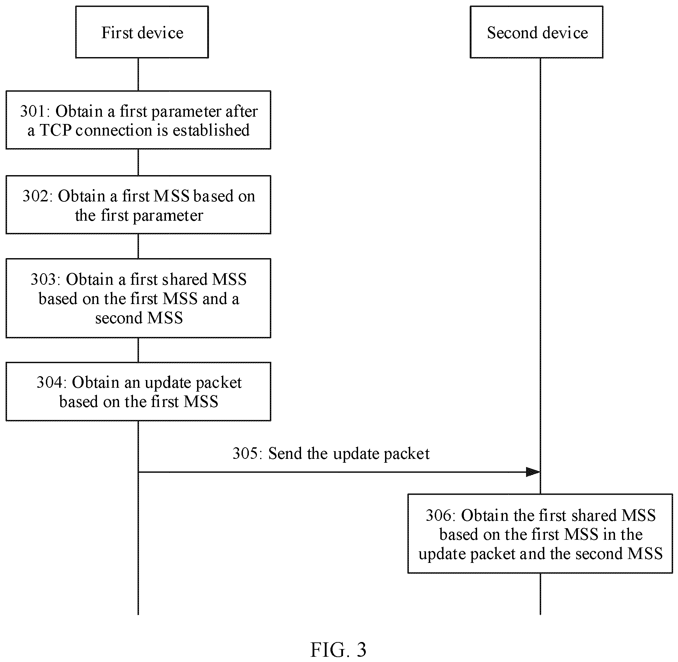

FIG. 3 is a flowchart of a method for obtaining a shared MSS according to an embodiment of this application. The method for obtaining a shared MSS may be performed by a first device and a second device. The first device may be the first terminal device in the system shown in FIG. 1. The second device may be the second terminal device in the system shown in FIG. 1. Refer to FIG. 3. The method includes the following steps.

Step 301: The first device obtains a first parameter after establishing a TCP connection, where the first parameter corresponds to the TCP connection.

For example, when establishing the TCP connection to the second device, the first device may obtain an MTU that corresponds to an interface for establishing the TCP connection to the second device, an interface identifier of the interface, and a length of a buffer allocated to the TCP connection. The first device may obtain a first value through calculation based on the MTU of the interface, and use a minimum value of the first value and the length of the buffer as an initial MSS of the first device. Similarly, the second device may also obtain an initial MSS of the second device according to the foregoing method. The first device may send the initial MSS of the first device to the second device. The second device may send the initial MSS of the second device to the first device. Any one of the two devices may obtain an initial shared MSS by selecting a minimum value from the initial MSS of the device and the initial MSS sent by the other device. The initial shared MSS is a shared MSS negotiated by the first device and the second device when the TCP connection is established. The buffer allocated to the TCP connection is an area used to buffer data received through the TCP connection, that is, a receive buffer. Different TCP connections correspond to different buffers.

For example, after the first device establishes the TCP connection to the second device, a parameter of the TCP connection on the first device may change. For example, the interface on the first device for establishing the TCP connection to the second device changes, or the length of the buffer allocated to the TCP connection changes. The change of the interface for establishing the TCP connection includes: The identifier of the interface changes, and/or the MTU of the interface changes. The first device may obtain a changed parameter (that is, the first parameter).

In an implementation, the first device may obtain a changed parameter of the TCP connection in a manner (a subscription and reporting manner) of receiving an event notification. When the parameter of the TCP connection changes, sending of the event notification to the first device may be triggered. After receiving the event notification, the first device may obtain the changed parameter (the first parameter). The event notification includes the first parameter, and the first device can obtain the first parameter from the event notification.

In another implementation, the first device may alternatively monitor whether the parameter of the TCP connection changes. The first device may detect, in a polling mode, whether the parameter of the TCP connection changes. When detecting that the parameter of the TCP connection changes, the first device may obtain a changed parameter (the first parameter).

Step 302: The first device obtains a first MSS based on the first parameter.

It can be learned from the foregoing step 301 that the parameter of the TCP connection may include the identifier of the interface of the TCP connection, the MTU of the interface, and the length of the buffer allocated to the TCP connection. One or more of the foregoing parameters may change. The first parameter may include one or more of a changed MTU of the interface, a changed length of the buffer, and a changed identifier of the interface.

Case 1: The first parameter includes the MTU corresponding to the interface, and the first device may obtain the first MSS based on a second parameter and the MTU. The second parameter is the length of the buffer obtained when the TCP connection is established, and the first MSS is a minimum value of the second parameter and a data length corresponding to the first parameter (the MTU corresponding to the interface). After the TCP connection is established, the MTU corresponding to the interface changes, and the interface of the TCP connection and the length of the buffer do not change. After obtaining the changed MTU, the first device may obtain a data length corresponding to the changed MTU by subtracting a length of a header such as a length of a TCP header and a length of an IP header from the changed MTU. The first device may further obtain the length of the buffer (the length of the buffer obtained when the TCP connection is established). The first device may obtain the length of the buffer (the length of the buffer obtained when the TCP connection is established) in real time, or may obtain a stored length of the buffer. The stored length of the buffer is the length of the buffer obtained and stored when the TCP connection is established. The first device may select a minimum value from the data length corresponding to the first parameter (the MTU corresponding to the interface) and the length of the buffer obtained when the TCP connection is established, and use the minimum value as the first MSS.

An MTU of the interface obtained after the TCP connection is established is not equal to the MTU of the interface obtained when the TCP connection is established. If the MTU of the interface obtained after the TCP connection is established is greater than the MTU of the interface obtained when the TCP connection is established, and a data length corresponding to the MTU of the interface that is obtained after the TCP connection is established is less than the length of the buffer obtained when the TCP connection is established, the data length corresponding to the MTU of the interface that is obtained when the TCP connection is established is less than the length of the buffer obtained when the TCP connection is established. That is, the initial MSS of the first device determined when the TCP connection is established is equal to the data length corresponding to the initial MTU. However, the MTU of the interface obtained after the TCP connection is established is less than the length of the buffer obtained when the TCP connection is established. Therefore, the first MSS is equal to the data length corresponding to the MTU of the interface that is obtained after the TCP connection is established, and the first MSS increases compared with the initial MSS of the first device that is determined when the TCP connection is established.

If the MTU of the interface obtained after the TCP connection is established is less than the MTU of the interface obtained when the TCP connection is established, and the MTU of the interface obtained after the TCP connection is established is less than the length of the buffer obtained when the TCP connection is established, the first MSS is equal to the data length corresponding to the MTU of the interface that is obtained after the TCP connection is established. The initial MSS of the first device determined when the TCP connection is established may be equal to the data length corresponding to the MTU of the interface that is obtained when the TCP connection is established or the length of the buffer obtained when the TCP connection is established, and the data length corresponding to the MTU of the interface that is obtained after the TCP connection is established is less than the data length corresponding to the MTU of the interface that is obtained when the TCP connection is established or the length of the buffer obtained when the TCP connection is established. Therefore, the first MSS is less than the initial MSS of the first device.

If the MTU of the interface obtained after the TCP connection is established is greater than the MTU of the interface obtained when the TCP connection is established, and the data length corresponding to the MTU of the interface that is obtained after the TCP connection is established is greater than the length of the buffer obtained when the TCP connection is established, the first MSS is equal to the length of the buffer obtained when the TCP connection is established. The initial MSS of the first device determined when the TCP connection is established may be equal to the data length corresponding to the MTU that is obtained when the TCP connection is established, or may be equal to the length of the buffer obtained when the TCP connection is established. Therefore, the first MSS is greater than the initial MSS of the first device.

If the MTU of the interface obtained after the TCP connection is established is less than the MTU of the interface obtained when the TCP connection is established, and the data length corresponding to the MTU of the interface that is obtained after the TCP connection is established is greater than the length of the buffer obtained when the TCP connection is established, the data length corresponding to the MTU of the interface that is obtained when the TCP connection is established is greater than the length of the buffer obtained when the TCP connection is established, and the initial MSS of the first device is equal to the length of the buffer obtained when the TCP connection is established. However, the data length corresponding to the MTU of the interface that is obtained after the TCP connection is established is greater than the length of the buffer obtained when the TCP connection is established. Therefore, the first MSS is equal to the length of the buffer obtained when the TCP connection is established, and the first MSS does not change compared with the initial MSS of the first device.

In conclusion, it can be learned that, when the MTU of the interface changes, the first MSS may be equal to the initial MSS of the first device, or the first MSS increases with the MTU of the interface, and decreases with the MTU of the interface.

Case 2: The first parameter includes the MTU corresponding to the interface and the length of the buffer, and the first device may obtain the first MSS based on the MTU corresponding to the interface and the length of the buffer. The first MSS is a minimum value of the length of the buffer and a data length corresponding to the MTU that corresponds to the interface. After the TCP connection is established, both the MTU corresponding to the interface and the length of the buffer change. After obtaining the changed MTU and the changed length of the buffer, the first device may obtain a data length corresponding to the changed MTU by subtracting a length of a header such as a length of a TCP header and a length of an IP header from the changed MTU. Then, the first device may select a minimum value from the data length corresponding to the changed MTU and the changed length of the buffer, and use the minimum value as the first MSS. An MTU (the MTU that corresponds to the interface and that is included in the first parameter) of the interface obtained after the TCP connection is established is not equal to the MTU of the interface obtained when the TCP connection is established, and a length of the buffer (a length of the buffer included in the first parameter) obtained after the TCP connection is established is not equal to the length of the buffer obtained when the TCP connection is established.

For example, when both the MTU corresponding to the interface and the length of the buffer change, compared with the initial MSS of the first device, the first MSS may increase with the MTU of the interface, and decrease with the MTU of the interface, or may increase with the length of the buffer, and decrease with the length of the buffer.

Case 3: The first parameter includes a first identifier, and the first identifier is used to identify an interface corresponding to the TCP connection. The first device may obtain the first MSS based on a third parameter and the MTU corresponding to the interface that is identified by the first identifier. The third parameter is the length of the buffer obtained when the TCP connection is established. The first MSS is a minimum value of the third parameter and the data length corresponding to the MTU that corresponds to the interface identified by the first identifier. After the TCP connection is established, the interface of the TCP connection changes, and the length of the buffer does not change. Because the interface of the TCP connection changes, the MTU corresponding to the interface may be different from or the same as the MTU corresponding to the interface when the TCP connection is established. The first device may obtain the changed MTU of the interface (the interface identified by the first identifier), and obtain a data length corresponding to the changed MTU of the interface by subtracting a length of a header such as a length of a TCP header and a length of an IP header from the changed MTU corresponding to the interface. The first device may further obtain the length of the buffer (the length of the buffer obtained when the TCP connection is established). The first device may select a minimum value from the data length corresponding to the MTU of the interface that is identified by the first identifier and the length of the buffer obtained when the TCP connection is established, and use the minimum value as the first MSS. The first identifier obtained after the TCP connection is established is different from the identifier of the interface of the TCP connection obtained when the TCP connection is established.

For example, when the interface changes, the MTU corresponding to the interface changes, but the length of the buffer does not change. Therefore, refer to the description in Case 1. It can be learned that the first MSS may not change compared with the initial MSS of the first device. Alternatively, the first MSS may increase with the MTU of the changed interface, and decrease with the MTU of the changed interface.

Case 4: The first parameter includes the length of the buffer. The first device may obtain the first MSS based on a fourth parameter and the length of the buffer. The fourth parameter is the MTU of the interface obtained when the TCP connection is established, and the first MSS is a minimum value of a data length corresponding to the fourth parameter and the length of the buffer. After the TCP connection is established, the length of the buffer changes, and neither the interface of the TCP connection nor the MTU corresponding to the interface changes. The first device may obtain the changed length of the buffer. The first device may further obtain the MTU of the interface (the MTU of the interface obtained when the TCP connection is established), and obtain a data length corresponding to the MTU obtained when the TCP connection is established by subtracting a length of a header such as a length of a TCP header and a length of an IP header from the MTU obtained when the TCP connection is established. A minimum value is selected from the data length corresponding to the MTU obtained when the TCP connection is established and a length of the buffer obtained after the TCP connection is established, and the minimum value is used as the first MSS. The length of the buffer (the first parameter) obtained after the TCP connection is established is not equal to the length of the buffer obtained when the TCP connection is established.

For example, when the length of the buffer changes, the interface of the TCP connection and the MTU of the interface do not change. Therefore, the first MSS may not change compared with the initial MSS of the first device, or may increase with the length of the buffer, and decrease with the length of the buffer.

Case 5: The first parameter includes a first identifier and the length of the buffer. The first device may obtain the first MSS based on the length of the buffer and an MTU corresponding to an interface that is identified by the first identifier. The first MSS is a minimum value of the length of the buffer included in the first parameter and a data length corresponding to the MTU of the interface that is identified by the first identifier. After the TCP connection is established, both the interface of the TCP connection and the length of the buffer change. Because the interface of the TCP connection changes, the changed MTU of the interface may be different from or the same as the MTU of the interface obtained when the TCP connection is established. The first device may obtain the changed MTU of the interface (the interface identified by the first identifier), and obtain a data length corresponding to the changed MTU of the interface by subtracting a length of a header such as a length of a TCP header and a length of an IP header from the changed MTU of the interface. A minimum value is selected from the data length corresponding to the changed MTU of the interface and the changed length of the buffer (the length of the buffer included in the first parameter), and the minimum value is used as the first MSS. The first identifier obtained after the TCP connection is established is different from the identifier of the interface of the TCP connection obtained when the TCP connection is established. In addition, a length of the buffer (the length of the buffer included in the first parameter) obtained after the TCP connection is established is not equal to the length of the buffer obtained when the TCP connection is established.

For example, the change of the interface of the TCP connection may cause the change of the MTU, or may not cause the change of the MTU. That is, although the interface of the TCP connection changes, the changed MTU corresponding to the interface may be the same as or different from the earlier MTU of the interface.

If the change of the interface causes the change of the MTU of the interface, both the MTU of the interface and the length of the buffer change. Therefore, compared with the initial MSS of the first device, the first MSS may increase with the MTU of the interface, and decrease with the MTU of the interface, or may increase with the length of the buffer, and decrease with the length of the buffer.

If the change of the interface does not cause the change of the MTU, when the length of the buffer changes, the initial MSS of the first device may not change compared with the initial MSS of the first device, or may increase with the length of the buffer, and decrease with the length of the buffer.

Step 303: The first device obtains a first shared MSS based on the first MSS and a second MSS.

It can be learned from the foregoing step 301 that, in a phase of establishing the TCP connection, the first device may send the initial MSS of the first device to the second device, and the second device may send the initial MSS of the second device to the first device. After receiving the initial MSS sent by the second device, the first device may store the initial MSS, where the initial MSS is the second MSS.

In this step, after obtaining the first MSS, the first device may select a minimum value from the first MSS and the second MSS, and use the minimum value as the first shared MSS. Then, the first device may replace a currently stored shared MSS with the first shared MSS, to complete updating of a shared MSS. The first shared MSS is an MSS used by the first device to subsequently send a data packet to the second device.

It can be learned from the foregoing step 302 that the first MSS may increase because the first parameter increases compared with the parameter that is used when the TCP connection is established, or may decrease because the first parameter decreases compared with the parameter that is used when the TCP connection is established. Therefore, if the first MSS is less than the second MSS, a value of the first shared MSS is a value of the first MSS. That is, a change trend of the first shared MSS is the same as that of the first MSS. If the first MSS is greater than the initial MSS of the first device, and the first MSS is less than the second MSS, the first shared MSS is greater than the initial shared MSS determined through negotiation. Compared with a related technology in which an initial shared MSS is always used for packet segmentation, the first shared MSS obtained in the method provided in the embodiments of this application may be used for packet segmentation, which can effectively reduce a quantity of packets and improve network bandwidth utilization.

If the first MSS is less than the initial MSS of the first device, and the first MSS is less than the second MSS, the first shared MSS is less than the initial shared MSS determined through negotiation. Compared with the related technology in which the initial shared MSS is always used for packet segmentation, the first shared MSS obtained in the method provided in the embodiments of this application may be used for packet segmentation, so that an excessively large packet can be prevented from generating an IP fragment or being discarded by a receive end, such as the second device.

In addition, if the first MSS is less than the initial MSS of the first device because the length of the buffer is decreased, and the first MSS is less than the second MSS, the first shared MSS is less than the initial shared MSS determined through negotiation. Because the length of the buffer is decreased, the first device sends, to the second device, a notification message that carries a decreased length of the buffer. After receiving the decreased length of the buffer, the second device compares the decreased length of the buffer with the initial shared MSS. Because the decreased length of the buffer is less than the initial MSS of the first device and the initial MSS of the second device, the decreased length of the buffer is less than the initial shared MSS. After finding that the decreased length of the buffer is less than the initial shared MSS, if the second device does not update the initial shared MSS, the second device considers that the first device is only temporarily incapable of receiving and processing too many data packets. In this case, the second device stops sending a data packet, to wait for the first device to notify the second device that the length of the buffer is restored. If the second device does not receive a message that is sent by the first device to notify the second device that the length of the buffer is restored, and waiting duration exceeds preset duration, the second device continues to send a next data packet. After sending the next data packet, the second device still waits for a notification from the first device in the foregoing manner. It can be learned that, when finding that the length of the buffer of the first device decreases and is less than the initial shared MSS, if the second device does not update the initial shared MSS, the second device sends a data packet to the first device every preset duration, instead of continuously sending data packets. As a result, a TCP throughput decreases sharply. However, if the initial shared MSS is updated to the first shared MSS by using the method in this application, and the second device is triggered to update the initial shared MSS to the first shared MSS by using subsequent steps, the second device may find that the decreased length of the buffer is equal to the first shared MSS when comparing the decreased length of the buffer with the first shared MSS. In this case, the second device does not wait for, by using the foregoing method, the message that is sent by the first device to notify the second device that the length of the buffer is restored, and does not return data to the first device every preset duration. This avoids a decrease in the TCP throughput.

Step 304: The first device obtains an update packet based on the first MSS, where the update packet includes the first MSS.

After obtaining the first MSS, the first device may obtain the update packet based on the first MSS.

The update packet may be a packet that carries the first MSS instead of data. That is, the update packet is a packet specifically used to indicate the second device to perform MSS updating.

Optionally, the update packet may alternatively be a data packet to be sent by the first device. That is, the first MSS may be added to the to-be-sent data packet. In this case, the first MSS may be carried in a packet header of the data packet. The data packet may be a first data packet obtained through segmentation according to the first shared MSS.

Step 305: The first device sends the update packet to the second device.

In this embodiment of this application, the first device may directly communicate with the second device. In other words, the first device may directly send the update packet to the second device without another forwarding device.

Step 306: The second device obtains the first shared MSS based on the first MSS in the update packet and the second MSS.

It can be learned from the foregoing step 301 that, in the phase of establishing the TCP connection, the second device obtains the initial MSS, that is, the second MSS, of the second device through calculation based on the parameter of the TCP connection. Based on this, in this step, after receiving the update packet, the second device may obtain the first MSS from the update packet, and obtain the second MSS obtained when the TCP connection is established. Then, the second device may obtain the minimum value of the first MSS and the second MSS, use the minimum value as the first shared MSS, and replace the currently stored shared MSS with the first shared MSS, to complete updating of the MSS. The first shared MSS is an MSS used by the second device to subsequently send a data packet to the first device.

In this embodiment of this application, the first device may obtain the first parameter after establishing the TCP connection, obtain the first MSS based on the first parameter, and further obtain the first shared MSS based on the first MSS and the second MSS. That is, after a TCP connection is established, when a parameter of the TCP connection changes, a device may be triggered to perform MSS updating. In this way, an updated shared MSS is subsequently used for packet transmission. This avoids problems such as a resource waste, a packet loss, or a TCP throughput decrease caused by always using the MSS negotiated during the TCP connection establishment for packet transmission.

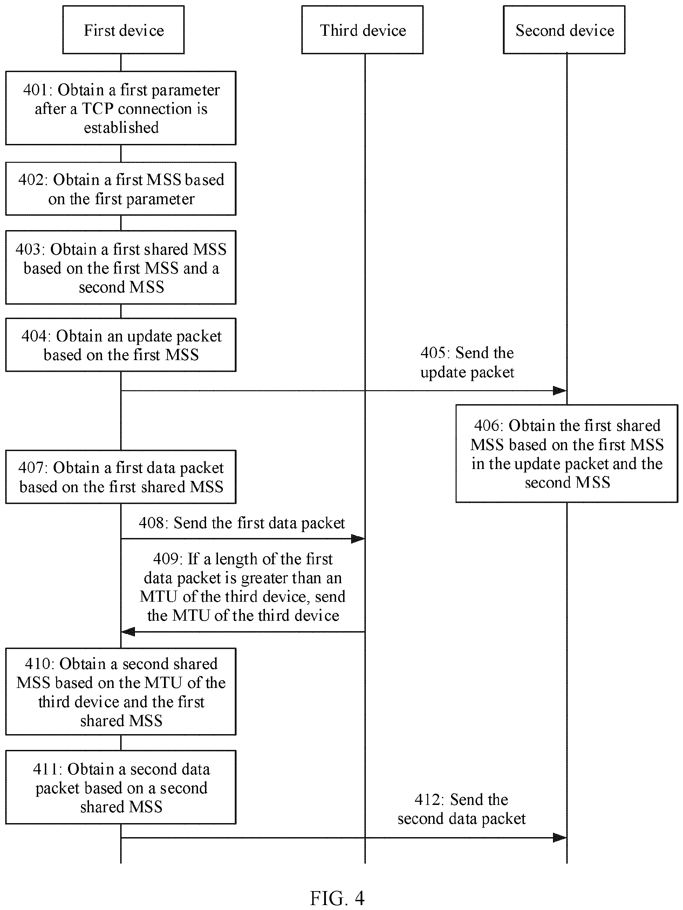

The foregoing embodiment mainly describes a process in which the first device and the second device update the shared MSS. In some possible scenarios, a forwarding device further exists on a path on which the first device and the second device are located, and the forwarding device is referred to as a third device. That is, a packet transmitted between the first device and the second device is to be forwarded by the third device. In this case, the first device and the second device may further update the MSS by using steps in the embodiment shown in FIG. 4, so that an updated MSS is adapted to an MTU of the forwarding device at the same time.

FIG. 4 is a flowchart of another method for obtaining a shared MSS according to an embodiment of this application. As shown in FIG. 4, the method includes the following steps.

Step 401: A first device obtains a first parameter after establishing a TCP connection, where the first parameter corresponds to the TCP connection.

Step 402: The first device obtains a first MSS based on the first parameter.

Step 403: The first device obtains a first shared MSS based on the first MSS and a second MSS.

Step 404: The first device obtains an update packet based on the first MSS, where the update packet includes the first MSS.

For an implementation of steps 401 to 404, refer to steps 301 to 304 in the foregoing embodiment. Details are not described herein again in this embodiment of this application.

Step 405: The first device sends the update packet to a second device through a third device.

In this embodiment of this application, after obtaining the update packet, the first device may send the update packet to the third device, and the third device may forward the update packet to the second device.

Step 406: The second device obtains the first shared MSS based on the first MSS in the update packet and the second MSS.

For an implementation of this step, refer to step 306 in the foregoing embodiment.

Step 407: The first device obtains a first data packet based on the first shared MSS.

After updating an initial shared MSS to the first shared MSS, the first device may perform data segmentation by using the first shared MSS to obtain the first data packet.

Step 408: The first device sends the first data packet to the third device.

Step 409: If the third device determines that a length of the first data packet is greater than an MTU of the third device, the third device sends the MTU of the third device to the first device.

The MTU of the third device is an MTU of an outbound interface on the third device corresponding to a TCP connection, that is, the MTU of the outbound interface that is on the third device and that establishes the TCP connection to the second device.

After receiving the first data packet, the third device may determine whether the length of the first data packet is greater than the MTU of the third device, that is, determine whether a length of a packet segmented based on the first shared MSS is adapted to the MTU of the third device.

If the length of the first data packet is greater than the MTU of the third device, it indicates that the first shared MSS currently obtained by the first device is relatively large and is not adapted to the MTU of the third device. In this case, the third device may discard the first data packet, and send an Internet Control Message Protocol (Internet Control Message Protocol, ICMP) packet to the first device, where the ICMP packet may carry the MTU of the third device.

Certainly, in another case, if the length of the first data packet is not greater than the MTU of the third device, the third device may directly forward the first data packet to the second device.

Step 410: The first device obtains a second shared MSS based on the MTU of the third device and the first shared MSS.

After receiving the MTU of the third device, the first device may obtain a third MSS by subtracting a length of a header such as a length of a TCP header and a length of an IP header from the MTU of the third device. Then, the first device may select a minimum value from the third MSS and the first shared MSS, and use the minimum value as the second shared MSS.

Step 411: The first device obtains a second data packet based on the second shared MSS.

For example, after sending the first data packet, the first device receives no acknowledgment packet returned by the second device, but receives the ICMP packet from the third device. Therefore, the first device may learn that the first data packet has been discarded. On this basis, after obtaining the second shared MSS, the first device may re-segment the first data packet according to the second shared MSS, to obtain the second data packet.

Step 412: The first device sends the second data packet to the second device through the third device.

For example, the first device may send the second data packet to the third device. Because the second data packet is obtained through segmentation according to the second shared MSS, the second shared MSS is adapted to the MTU of the third device. In this way, the third device forwards the resent second data packet to the second device.

In this embodiment of this application, the first device may obtain the first parameter after establishing the TCP connection, obtain the first MSS based on the first parameter, and further obtain the first shared MSS based on the first MSS and the second MSS. That is, after a TCP connection is established, when a parameter of the TCP connection changes, a device may update an MSS of the device, and further update a shared MSS based on an updated MSS of the device. Subsequently, the first device may transmit a data packet by using an updated shared MSS. When the updated shared MSS is used to transmit the data packet, the third device that is located between the first device and the second device and configured to forward a packet may determine, based on a length of the data packet, whether the updated shared MSS is adapted to the MTU of the third device. If the updated shared MSS is not adapted to the MTU of the third device, a packet may be sent to the first device to trigger the first device to adjust the first shared MSS again, so that an adjusted second shared MSS is adapted to the MTU of the third device.

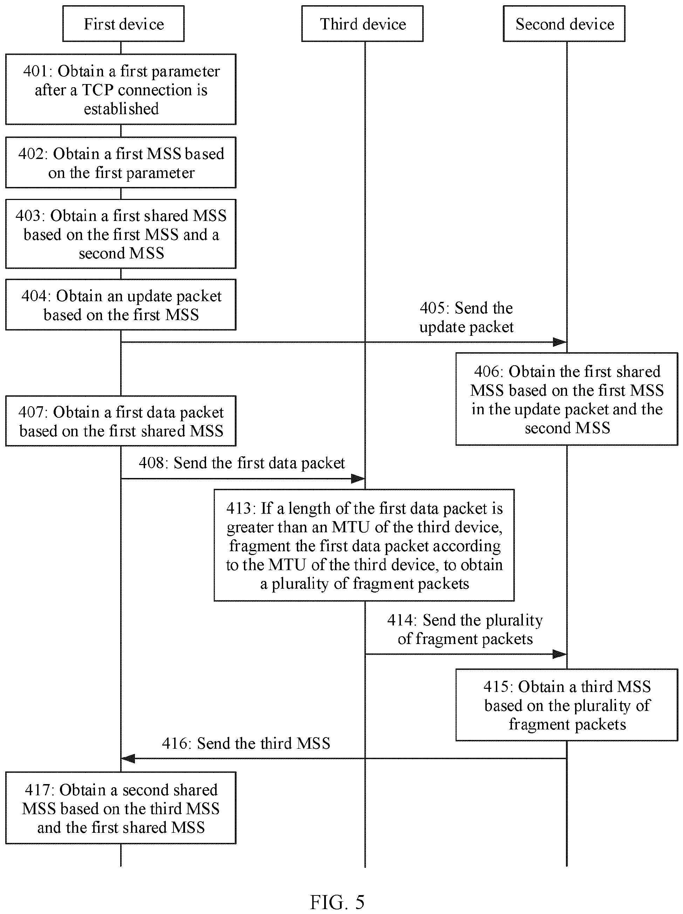

For example, in some possible scenarios, after finding that the length of the first data packet is greater than the MTU of the third device, the third device may not discard the first data packet, but fragment the first data packet according to the MTU of the third device, and forward fragment packets to the second device. After receiving the fragment packets, the second device may determine the third MSS based on the fragment packets, and further send the third MSS to the first device, so that the first device obtains the second shared MSS based on the third MSS and the first shared MSS. That is, refer to FIG. 5. The foregoing steps 409 to 412 may be alternatively replaced with the following steps 413 to 416.

Step 413: If the third device determines that a length of the first data packet is greater than an MTU of the third device, fragment the first data packet according to the MTU of the third device, to obtain a plurality of fragment packets.

The MTU of the third device is an MTU of an outbound interface on the third device corresponding to a TCP connection, that is, the MTU of the outbound interface that is on the third device and that establishes the TCP connection to the second device.

For example, if the length of the first data packet is greater than the MTU of the third device, it indicates that the length of the first data packet is not adapted to the MTU of the third device. In this case, the third device may perform IP packet fragmentation on the first data packet according to the MTU of the third device, to obtain the plurality of fragment packets, where a length of a fragment packet with a maximum length in the plurality of fragment packets is equal to the MTU of the third device.

Step 414: The third device sends the plurality of fragment packets to the second device.

Step 415: The second device obtains a third MSS based on the received plurality of fragment packets.

For example, after receiving the fragment packets, the second device may obtain the MTU of the third device based on the length of the fragment packet with the maximum length in the plurality of fragment packets. The second device may use, as the third MSS, a packet length obtained after subtracting lengths of a TCP header and an IP header of the packet that is fragmented according to the MTU of the third device.

Step 416: The second device sends the third MSS to the first device.

For example, the second device may send the third MSS to the third device, and the third device forwards the third MSS to the first device. The second device may use an MSS negotiation packet to carry the third MSS and send the MSS negotiation packet to the third device, and the third device may forward the MSS negotiation packet to the first device.

Optionally, the second device may alternatively send the third MSS to the first device through another forwarding device (different from the third device). Alternatively, the second device may directly send the third MSS to the first device.

Step 417: The first device obtains a second shared MSS based on the third MSS and the first shared MSS.

For example, the first device may select a minimum value from the third MSS and the first shared MSS, use the minimum value as the second shared MSS, and replace the first shared MSS with the second shared MSS.

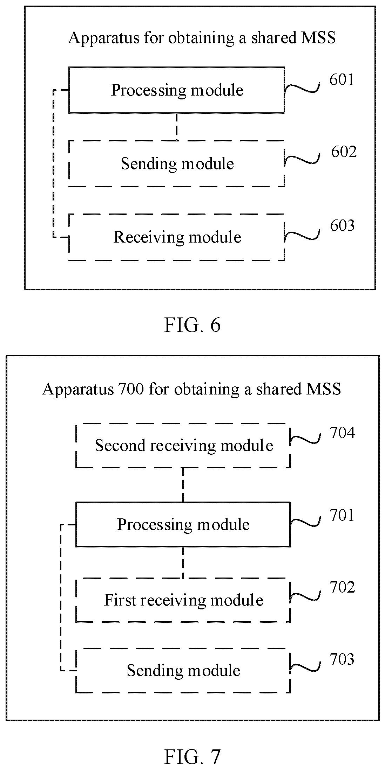

Refer to FIG. 6. An embodiment of this application provides an apparatus 600 for obtaining a shared MSS. The apparatus 600 may be integrated into the first device in the foregoing embodiment. The apparatus 600 includes a processing module 601, configured to perform steps 301 to 303 or steps 401 to 403 in the foregoing embodiment.

Optionally, a first parameter includes an MTU corresponding to an interface, and the interface is an interface corresponding to a TCP connection. The processing module 601 is specifically configured to obtain a first MSS based on a second parameter and the MTU corresponding to the interface, where the second parameter is a length of a buffer obtained when the TCP connection is established, and the first MSS is a minimum value of the second parameter and a data length corresponding to the MTU.

Optionally, a first parameter includes an MTU corresponding to an interface and a length of a buffer, and the interface is an interface corresponding to a TCP connection. The processing module 601 is specifically configured to obtain a first MSS based on the MTU corresponding to the interface and the length of the buffer, where the first MSS is a minimum value of the length of the buffer and a data length corresponding to the MTU.

Optionally, a first parameter includes a first identifier, and the first identifier is used to identify an interface corresponding to a TCP connection. The processing module is specifically configured to obtain a first MSS based on a third parameter and an MTU corresponding to the interface that is identified by the first identifier, where the third parameter is a length of a buffer obtained when the TCP connection is established, and the first MSS is a minimum value of the third parameter and a data length corresponding to the MTU.

Optionally, a first parameter includes a length of a buffer. The processing module 601 is specifically configured to obtain a first MSS based on a fourth parameter and the length of the buffer, where the fourth parameter is an MTU of an interface obtained when a TCP connection is established, the interface is an interface corresponding to the TCP connection, and the first MSS is a minimum value of the fourth parameter and the length of the buffer.

Optionally, a first parameter includes a first identifier and a length of the buffer, and the first identifier is used to identify an interface corresponding to a TCP connection. The processing module 601 is specifically configured to obtain a first MSS based on the length of the buffer and an MTU corresponding to the interface that is identified by the first identifier, where the first MSS is a minimum value of the length of the buffer and a data length corresponding to the MTU.

Optionally, refer to FIG. 6. The apparatus further includes a sending module 602. The processing module 601 is further configured to obtain an update packet based on the first MSS, where the update packet includes the first MSS. The sending module 602 is configured to send the update packet to a second device.

Optionally, refer to FIG. 6. The apparatus further includes a receiving module 603. The receiving module 603 is configured to receive an MTU of a third device sent by the third device, where the third device is a device on a path on which the first device and the second device are located, and the MTU of the third device is an MTU of an interface on the third device corresponding to a TCP connection. The processing module 601 is further configured to obtain a third MSS based on the MTU of the third device, and obtain a second shared MSS based on the third MSS and a first shared MSS, where the second shared MSS is a minimum value of the third MSS and the first shared MSS.

In conclusion, in this embodiment of this application, after the first device establishes the TCP connection, a shared MSS, such as the first shared MSS, may be updated based on a changed connection parameter, such as the first parameter. In this way, an updated shared MSS can be used for packet transmission, which helps avoid a resource waste, a packet loss, a TCP throughput decrease, or the like.

FIG. 7 is another apparatus 700 for obtaining a shared MSS according to an embodiment of this application. The apparatus 700 may be integrated into the second device in the foregoing embodiment. The apparatus 700 includes a processing module 701, configured to perform step 306 or step 406 in the foregoing embodiment.

Optionally, refer to FIG. 7. The apparatus further includes a first receiving module 702. The first receiving module 702 is configured to receive an update packet sent by a first device, where the update packet includes a first MSS.

Optionally, refer to FIG. 7. The apparatus further includes a sending module 703 and a second receiving module 704. The second receiving module 704 is configured to receive a plurality of fragment packets sent by the third device, where the third device is a device on a path on which the first device and the second device are located, and the plurality of fragment packets are obtained by fragmenting, according to an MTU of the third device, a packet sent by the first device. The MTU of the third device is an MTU of an interface on the third device corresponding to a TCP connection. The processing module 701 is configured to obtain a third MSS based on the plurality of fragment packets. The sending module 703 is configured to send the third MSS to the first device, so that the first device obtains a second shared MSS based on the third MSS and a first shared MSS, where the second shared MSS is a minimum value of the third MSS and the first shared MSS.

In this embodiment of this application, the second device may obtain the first shared MSS based on a first MSS that is obtained by the first device after the TCP connection is established and the second MSS of the second device. That is, after the TCP connection is established, when a parameter of the TCP connection changes, the second device may be triggered to update a shared MSS. In this way, an updated shared MSS is subsequently used for packet transmission. This avoids problems such as a resource waste, a packet loss, or a TCP throughput decrease caused by always using the shared MSS negotiated during the TCP connection establishment for packet transmission.

It should be noted that, when the apparatus for obtaining a shared MSS provided in the foregoing embodiment obtains a shared MSS, division of the functional modules is merely used as an example for description. In actual application, the foregoing functions may be allocated to different functional modules for implementation based on a requirement. To be specific, an internal structure of the device is divided into different functional modules, to implement all or some of the foregoing functions. In addition, the apparatus for obtaining a shared MSS provided in the foregoing embodiment and the method embodiment for obtaining a shared MSS belong to a same concept. For a specific implementation process, refer to the method embodiment. Details are not described herein again.

All or some of the foregoing embodiments may be implemented by using software, hardware, firmware, or any combination thereof. When the embodiments are implemented by using the software, all or some of the embodiments may be implemented in a form of a computer program product. The computer program product includes one or more computer instructions. When the computer instructions are loaded and executed on the computer, the procedure or functions according to the embodiments of the present invention are all or partially generated. The computer may be a general-purpose computer, a special-purpose computer, a computer network, or another programmable apparatus. The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (Digital Subscriber Line, DSL)) or wireless (for example, infrared, radio, and microwave, or the like) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a digital versatile disc (Digital Versatile Disc, DVD), a semiconductor medium (for example, a solid-state drive (Solid State Disk, SSD)), or the like.

A person of ordinary skill in the art may understand that all or some of the steps of the embodiments may be implemented by hardware or a program instructing related hardware. The program may be stored in a computer-readable storage medium. The storage medium may be a read-only memory, a magnetic disk, an optical disc, or the like.

The foregoing descriptions are merely embodiments of this application, but are not intended to limit this application. Any modification, equivalent replacement, or improvement made without departing from the spirit and principle of this application should fall within the protection scope of this application.

## Claims

1. A method for obtaining a shared maximum segment size MSS, wherein the method comprises:
obtaining, by a first device, a first parameter after establishing a Transmission Control Protocol TCP connection, wherein the first parameter corresponds to the TCP connection;
obtaining, by the first device, a first maximum segment size MSS based on the first parameter; and
obtaining, by the first device, a first shared MSS based on the first MSS and a second MSS, wherein the second MSS is an MSS sent by a second device.

2. The method according to claim 1, wherein the first parameter comprises a maximum transmission unit MTU corresponding to an interface, the interface is an interface corresponding to the TCP connection, and the obtaining, by the first device, a first MSS based on the first parameter comprises:
obtaining, by the first device, the first MSS based on a second parameter and the MTU corresponding to the interface, wherein the second parameter is a length of a buffer obtained when the TCP connection is established, and the first MSS is a minimum value of the second parameter and a data length corresponding to the MTU.

3. The method according to claim 1, wherein the first parameter comprises an MTU corresponding to an interface and a length of a buffer, the interface is an interface corresponding to the TCP connection, and the obtaining, by the first device, a first MSS based on the first parameter comprises:
obtaining, by the first device, the first MSS based on the MTU corresponding to the interface and the length of the buffer, wherein the first MSS is a minimum value of the length of the buffer and a data length corresponding to the MTU.

4. The method according to claim 1, wherein the first parameter comprises a first identifier, the first identifier is used to identify an interface corresponding to the TCP connection, and the obtaining, by the first device, a first MSS based on the first parameter comprises:
obtaining, by the first device, the first MSS based on a third parameter and an MTU corresponding to the interface that is identified by the first identifier, wherein the third parameter is a length of a buffer obtained when the TCP connection is established, and the first MSS is a minimum value of the third parameter and a data length corresponding to the MTU.

5. The method according to claim 1, wherein the first parameter comprises a length of a buffer, and the obtaining, by the first device, a first MSS based on the first parameter comprises:
obtaining, by the first device, the first MSS based on a fourth parameter and the length of the buffer, wherein the fourth parameter is an MTU of an interface obtained when the TCP connection is established, the interface is an interface corresponding to the TCP connection, and the first MSS is a minimum value of the fourth parameter and the length of the buffer.

6. The method according to claim 1, wherein the first parameter comprises a first identifier and a length of a buffer, the first identifier is used to identify an interface corresponding to the TCP connection, and the obtaining, by the first device, a first MSS based on the first parameter comprises:
obtaining, by the first device, the first MSS based on the length of the buffer and an MTU corresponding to the interface that is identified by the first identifier, wherein the first MSS is a minimum value of the length of the buffer and a data length corresponding to the MTU.

7. The method according to any one of claims 1 to 6, wherein the method further comprises:
obtaining, by the first device, an update packet based on the first MSS, wherein the update packet comprises the first MSS; and
sending, by the first device, the update packet to the second device.

8. The method according to claim 7, wherein the method further comprises:
receiving, by the first device, an MTU of a third device sent by the third device, wherein the third device is a device on a path on which the first device and the second device are located, and the MTU of the third device is an MTU of an interface on the third device corresponding to the TCP connection;
obtaining, by the first device, a third MSS based on the MTU of the third device; and
obtaining, by the first device, a second shared MSS based on the third MSS and the first shared MSS, wherein the second shared MSS is a minimum value of the third MSS and the first shared MSS.

9. A method for obtaining a shared maximum segment size MSS, wherein the method comprises:
obtaining, by a second device, a first shared MSS based on a first MSS and a second MSS, wherein the first MSS is an MSS obtained after a first device establishes a Transmission Control Protocol TCP connection, and the second MSS is an MSS obtained when the second device establishes the TCP connection.

10. The method according to claim 9, wherein the method further comprises:
receiving, by the second device, an update packet sent by the first device, wherein the update packet comprises the first MSS.

11. The method according to claim 9 or 10, wherein the method further comprises:
receiving, by the second device, a plurality of fragment packets sent by a third device, wherein the third device is a device on a path on which the first device and the second device are located, the plurality of fragment packets are obtained by fragmenting, according to an MTU of the third device, a packet sent by the first device, and the MTU of the third device is an MTU of an interface corresponding to the TCP connection on the third device;
obtaining, by the second device, a third MSS based on the plurality of fragment packets; and
sending, by the second device, the third MSS to the first device, so that the first device obtains a second shared MSS based on the third MSS and the first shared MSS, wherein the second shared MSS is a minimum value of the third MSS and the first shared MSS.

12. An apparatus for obtaining a shared maximum segment size MSS, used in a first device, wherein the apparatus comprises a processing module, and the processing module is configured to:
obtain a first parameter after establishing a Transmission Control Protocol TCP connection, wherein the first parameter corresponds to the TCP connection;
obtain a first MSS based on the first parameter; and
obtain a first shared MSS based on the first MSS and a second MSS, wherein the second MSS is an MSS sent by a second device.

13. The apparatus according to claim 12, wherein the first parameter comprises an MTU corresponding to an interface, the interface is an interface corresponding to the TCP connection, and the processing module is specifically configured to:
obtain the first MSS based on a second parameter and the MTU corresponding to the interface, wherein the second parameter is a length of a buffer obtained when the TCP connection is established, and the first MSS is a minimum value of the second parameter and a data length corresponding to the MTU.

14. The apparatus according to claim 12, wherein the first parameter comprises an MTU corresponding to an interface and a length of a buffer, the interface is an interface corresponding to the TCP connection, and the processing module is specifically configured to:
obtain the first MSS based on the MTU corresponding to the interface and the length of the buffer, wherein the first MSS is a minimum value of the length of the buffer and a data length corresponding to the MTU.

15. The apparatus according to claim 12, wherein the first parameter comprises a first identifier, the first identifier is used to identify an interface corresponding to the TCP connection, and the processing module is specifically configured to:
obtain the first MSS based on a third parameter and an MTU corresponding to the interface that is identified by the first identifier, wherein the third parameter is a length of a buffer obtained when the TCP connection is established, and the first MSS is a minimum value of the third parameter and a data length corresponding to the MTU.

16. The apparatus according to claim 12, wherein the first parameter comprises a length of a buffer, and the processing module is specifically configured to:
obtain the first MSS based on a fourth parameter and the length of the buffer, wherein the fourth parameter is an MTU of an interface obtained when the TCP connection is established, the interface is an interface corresponding to the TCP connection, and the first MSS is a minimum value of the fourth parameter and the length of the buffer.

17. The apparatus according to claim 12, wherein the first parameter comprises a first identifier and a length of a buffer, the first identifier is used to identify an interface corresponding to the TCP connection, and the processing module is specifically configured to:
obtain the first MSS based on the length of the buffer and an MTU corresponding to the interface that is identified by the first identifier, wherein the first MSS is a minimum value of the length of the buffer and a data length corresponding to the MTU.

18. The apparatus according to any one of claims 12 to 17, wherein the apparatus further comprises a sending module,
the processing module is further configured to obtain an update packet based on the first MSS, wherein the update packet comprises the first MSS; and
the sending module is configured to send the update packet to the second device.

19. The apparatus according to claim 18, wherein the apparatus further comprises a receiving module;
the receiving module is configured to receive an MTU of a third device sent by the third device, wherein the third device is a device on a path on which the first device and the second device are located, and the MTU of the third device is an MTU of an interface on the third device corresponding to the TCP connection; and
the processing module is further configured to obtain a third MSS based on the MTU of the third device, and obtain a second shared MSS based on the third MSS and the first shared MSS, wherein the second shared MSS is a minimum value of the third MSS and the first shared MSS.

20. An apparatus for obtaining a shared maximum segment size MSS, used in a second device, wherein the apparatus comprises:
a processing module, configured to obtain a first shared MSS based on a first MSS and a second MSS, wherein the first MSS is an MSS obtained after a first device establishes a Transmission Control Protocol TCP connection, and the second MSS is an MSS obtained when the second device establishes the TCP connection.

21. The apparatus according to claim 20, wherein the apparatus further comprises a first receiving module; and the first receiving module is configured to receive an update packet sent by the first device, wherein the update packet comprises the first MSS.

22. The apparatus according to claim 20 or 21, wherein the apparatus further comprises a second receiving module and a sending module;
the second receiving module is configured to receive a plurality of fragment packets sent by a third device, wherein the third device is a device on a path on which the first device and the second device are located, the plurality of fragment packets are obtained by fragmenting, according to an MTU of the third device, a packet sent by the first device, and the MTU of the third device is an MTU of an interface on the third device corresponding to the TCP connection;
the processing module is configured to obtain a third MSS based on the plurality of fragment packets; and
the sending module is configured to send the third MSS to the first device, so that the first device obtains a second shared MSS based on the third MSS and the first shared MSS, wherein the second shared MSS is a minimum value of the third MSS and the first shared MSS.
